# EUROPEAN PATENT APPLICATION

(11) **EP 4 780 011 A1**
(43) Date of publication of application: **22.07.2026**
(21) Application number: 24924261.1
(22) Date of filing: 29.11.2024
(51) Int. Cl.: H04N 23/60, G06T 7/00

(54) **IMAGE PROCESSING DEVICE, ARTIFICIAL SATELLITE, IMAGE PROCESSING SYSTEM, IMAGE PROCESSING METHOD, AND PROGRAM**

(71) Applicant: Orbital Lasers Co., Ltd, Tokyo 107-0052 (JP)
(72) Inventor: The designation of the inventor has not yet been filed
(74) Representative: Mathys & Squire
(86) International application number: PCT/JP2024/042382
(87) International publication number: WO 2026/115721

(57) **Abstract**

An image processing apparatus includes: an acquisition unit which acquires a plurality of area images which are captured by a first imaging apparatus mounted on a mobile object and are each composed of M×N pixels, with M pixels in a first direction corresponding to a moving direction of the mobile object and N pixels in a second direction intersecting the first direction, and acquires a plurality of line images which are captured by a second imaging apparatus mounted on the mobile object and are each composed of n×L pixels, with n pixels in the first direction and L pixels in the second direction; an identification unit which identifies a pixel displacement amount in the first direction and the second direction between the plurality of area images, based on the plurality of area images; and a generation unit which generates transmission data for transmitting the plurality of line images and pixel displacement amount information indicating the pixel displacement amount via a communication unit to an image generation apparatus which generates a connected image by connecting the plurality of line images which are adjusted in position in the first direction and the second direction by using the pixel displacement amount and aligned in the first direction.

## Description

### BACKGROUND

### 1. TECHNICAL FIELD

The present invention relates to an image processing apparatus, an artificial satellite, an image processing system, an image processing method, and a program.

### 2. RELATED ART

Non-Patent Document 1 discloses a method of analogically deriving a pixel displacement between images of an area sensor by using a Fourier optical system.

### Related Art Documents

### Patent Document

Non-Patent Document 1: K. Janschek et al. SmartScan: a robust pushbroom imaging concept for moderate spacecraft attitude stability, International Conference on Space Optics ICSO 2006, 27-30 June 2006

### General Disclosure

An image processing apparatus according to an aspect of the present invention may include an acquisition unit which acquires a plurality of area images which are captured by a first imaging apparatus mounted on a mobile object and are each composed of M×N (M and N are integers of 2 or more) pixels, with M pixels in a first direction corresponding to a moving direction of the mobile object and N pixels in a second direction intersecting the first direction, and acquires a plurality of line images which are captured by a second imaging apparatus mounted on the mobile object and are each composed of n×L (n is an integer of 1 or more, and L is an integer of 3 or more that is larger than M and N) pixels, with n pixels in the first direction and L pixels in the second direction. The image processing apparatus may include an identification unit which identifies a pixel displacement amount in the first direction and the second direction between the plurality of area images, based on the plurality of area images. The image processing apparatus may include a generation unit which generates transmission data for transmitting the plurality of line images and pixel displacement amount information indicating the pixel displacement amount via a communication unit to an image generation apparatus which generates a connected image by connecting the plurality of line images which are adjusted in position in the first direction and the second direction by using the pixel displacement amount and aligned in the first direction.

In any of the image processing apparatuses, the identification unit may identify the pixel displacement amount by comparing the plurality of area images by template matching.

In any of the image processing apparatuses, the plurality of area images may include a first area image and a second area image captured subsequently to the first area image. The identification unit may perform template matching between a first partial image in a first region within the first area image and each of a plurality of second partial images included in a search region which is larger than the first region and includes a second region shifted by a first number of pixels in the first direction and by a second number of pixels in the second direction from the first region within the second area image, so as to identify, as a target partial image, a second partial image having a highest degree of correlation among the plurality of second partial images, and identify the pixel displacement amount based on the first partial image and the target partial image.

In any of the image processing apparatuses, the identification unit may derive a degree of correlation between the first partial image and each of the plurality of second partial images, from a cross-correlation function obtained by convolving the first partial image and each of the plurality of second partial images in real space.

In any of the image processing apparatuses, the first number of pixels and the second number of pixels may be determined based on a moving direction and a moving speed of the mobile object, and a moving direction and a moving speed of a subject relative to the first imaging apparatus.

In any of the image processing apparatuses, the identification unit may start search with a second partial image in which a pixel located at a center of the second region is a central pixel, among the plurality of second partial images, and identify the target partial image by performing template matching between the first partial image and the second partial images in order from a second partial image closer to the second partial image.

In any of the image processing apparatuses, the identification unit may identify the pixel displacement amount in units of subpixels from a positional relationship between a center of the first partial image and a centroid derived from each value obtained by raising, to a third power or a fourth power, each value obtained by normalizing a degree of correlation with the target partial image and a degree of correlation with each of a plurality of peripheral partial images each having a center within a range of a predetermined number of pixels from a center of the target partial image.

In any of the image processing apparatuses, the identification unit may perform template matching between a third partial image in a third region different from the first region within the first area image and each of a plurality of fourth partial images included in a search region which is larger than the third region and includes a fourth region shifted by the first number of pixels in the first direction and by the second number of pixels in the second direction from the third region within the second area image, so as to identify, as another target partial image, a fourth partial image having a highest degree of correlation among the plurality of fourth partial images, and identify the pixel displacement amount based on the first partial image, the target partial image, the third partial image, and the another target partial image.

In any of the image processing apparatuses, the identification unit may identify the pixel displacement amount between the first area image and the second area image, based on a statistical value of a pixel displacement amount based on the first partial image and the target partial image and a pixel displacement amount based on the third partial image and the another target partial image.

In any of the image processing apparatuses, the first imaging apparatus may include an area sensor which captures the plurality of area images. The second imaging apparatus may include a line sensor which captures the plurality of line images or a time delay integration (TDI) sensor.

In any of the image processing apparatuses, the mobile object may be a flying object or an artificial satellite.

An artificial satellite according to an aspect of the present invention may include: any of the image processing apparatuses; the first imaging apparatus; the second imaging apparatus; and the communication unit which transmits the transmission data to the image generation apparatus.

An image processing system according to an aspect of the present invention may include: the artificial satellite; and the image generation apparatus which receives the transmission data and generates the connected image.

An image processing method according to an aspect of the present invention may include acquiring a plurality of area images which are captured by a first imaging apparatus mounted on a mobile object and are each composed of M×N (M and N are integers of 2 or more) pixels, with M pixels in a first direction corresponding to a moving direction of the mobile object and N pixels in a second direction intersecting the first direction, and acquiring a plurality of line images which are captured by a second imaging apparatus mounted on the mobile object and are each composed of n×L (n is an integer of 1 or more, and L is an integer of 3 or more that is larger than M and N) pixels, with n pixels in the first direction and L pixels in the second direction. The image processing method may include identifying a pixel displacement amount in the first direction and the second direction between the plurality of area images, based on the plurality of area images. The image processing method may include generating transmission data for transmitting the plurality of line images and pixel displacement amount information indicating the pixel displacement amount via a communication unit to an image generation apparatus which generates a connected image by connecting the plurality of line images which are adjusted in position in the first direction and the second direction by using the pixel displacement amount and aligned in the first direction.

A program according to an aspect of the present invention, when executed by a computer, may cause the computer to function as an acquisition unit which acquires a plurality of area images which are captured by a first imaging apparatus mounted on a mobile object and are each composed of M×N (M and N are integers of 2 or more) pixels, with M pixels in a first direction corresponding to a moving direction of the mobile object and N pixels in a second direction intersecting the first direction, and acquires a plurality of line images which are captured by a second imaging apparatus mounted on the mobile object and are each composed of n×L (n is an integer of 1 or more, and L is an integer of 3 or more that is larger than M and N) pixels, with n pixels in the first direction and L pixels in the second direction. The program may cause the computer to function as an identification unit which identifies a pixel displacement amount in the first direction and the second direction between the plurality of area images, based on the plurality of area images. The program may cause the computer to function as a generation unit which generates transmission data for transmitting the plurality of line images and pixel displacement amount information indicating the pixel displacement amount via a communication unit to an image generation apparatus which generates a connected image by connecting the plurality of line images which are adjusted in position in the first direction and the second direction by using the pixel displacement amount and aligned in the first direction.

The summary clause does not necessarily describe all necessary features of the embodiments of the present invention. In addition, the present invention may also be a sub-combination of the features described above.

### BRIEF DESCRIPTION OF THE DRAWINGS

Fig. 1 is a diagram illustrating an example of a system configuration of an image processing system according to the present embodiment.
Fig. 2 is a diagram illustrating an example of functional blocks of an image processing apparatus according to the present embodiment.
Fig. 3A is a diagram for explaining an area image and partial images.
Fig. 3B is a diagram for explaining an area image and partial images.
Fig. 4A is a diagram illustrating simulation results of an estimation error distribution in a vertical direction (AT direction) when a pixel displacement amount is estimated by each of template matching (TM) and phase-only correlation (POC).
Fig. 4B is a diagram illustrating simulation results of the estimation error distribution in a horizontal direction (CT direction) when the pixel displacement amount is estimated by each of the template matching (TM) and the phase-only correlation (POC).
Fig. 5 is a diagram illustrating an example of simulation results of an average estimation error and a standard deviation when the pixel displacement amount is estimated by each of the template matching (TM) and the phase-only correlation (POC).
Fig. 6 is a diagram illustrating average errors and standard deviations of pixel displacement amounts derived by parabola fitting, centroid calculation using a first-power value, and centroid calculation using a third-power value.
Fig. 7A is a diagram illustrating a distribution of an x-direction error and a y-direction error of the pixel displacement amount derived by the parabola fitting.
Fig. 7B is a diagram illustrating a distribution of an x-direction error and a y-direction error of the pixel displacement amount derived by the centroid calculation using the first-power value.
Fig. 7C is a diagram illustrating a distribution of an x-direction error and a y-direction error of the pixel displacement amount derived by the centroid calculation using the third-power value.
Fig. 8A is a diagram illustrating simulation results of deriving the pixel displacement amount by the parabola fitting, the centroid calculation using the first-power value and the centroid calculation using the third-power value, by using images shifted by different subpixel amounts in a horizontal direction (x axis direction).
Fig. 8B is a diagram illustrating simulation results of deriving the pixel displacement amount by the parabola fitting, the centroid calculation using the first-power value, and the centroid calculation using the third-power value, by using images shifted by different subpixel amounts in the horizontal direction (x axis direction).
Fig. 8C is a diagram illustrating simulation results of deriving the pixel displacement amount by the parabola fitting, the centroid calculation using the first-power value, and the centroid calculation using the third-power value, by using images shifted by different subpixel amounts in the horizontal direction (x axis direction).
Fig. 8D is a diagram illustrating simulation results of deriving the pixel displacement amount by the parabola fitting, the centroid calculation using the first-power value, and the centroid calculation using the third-power value, by using images shifted by different subpixel amounts in the horizontal direction (x axis direction).
Fig. 8E is a diagram illustrating simulation results of deriving the pixel displacement amount by the parabola fitting, the centroid calculation using the first-power value, and the centroid calculation using the third-power value, by using images shifted by different subpixel amounts in the horizontal direction (x axis direction).
Fig. 8F is a diagram illustrating simulation results of deriving the pixel displacement amount by the parabola fitting, the centroid calculation using the first-power value, and the centroid calculation using the third-power value, by using images shifted by different subpixel amounts in the horizontal direction (x axis direction).
Fig. 9A is a diagram illustrating a standard deviation and an average estimation error in an x direction of a pixel displacement amount performed by centroid calculation performed by changing a value of a power of a normalized correlation function.
Fig. 9B is a diagram illustrating a standard deviation and an average estimation error in the x direction of the pixel displacement amount performed by the centroid calculation performed by changing the value of the power of the normalized correlation function.
Fig. 10 is a diagram illustrating an example of a movement trajectory of an artificial satellite.
Fig. 11 is a diagram illustrating an example of a connected image in which a plurality of line images are connected.
Fig. 12 is a flowchart illustrating an example of a procedure of image transmission of an image processing apparatus 0.
Fig. 13 is a diagram showing an example of a hardware configuration.

### DESCRIPTION OF EXEMPLARY EMBODIMENTS

Hereinafter, the present invention will be described through embodiments of the present invention, but the following embodiments do not limit the present invention according to claims. In addition, not all of the combinations of features described in the embodiments are essential to the solution of the invention.

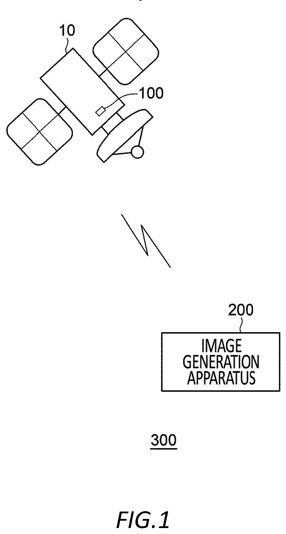

Fig. 1 is a diagram illustrating an example of a system configuration of an image processing system 300 according to the present embodiment. The image processing system 300 includes an artificial satellite 10 and an image generation apparatus 200. The artificial satellite 10 moves in outer space. The artificial satellite 10 may move in a predetermined revolution orbit around the Earth. The artificial satellite 10 is an example of a mobile object. In the present embodiment, the artificial satellite 10 will be described as an example of the mobile object, but the mobile object may be a flying object such as an unmanned aerial vehicle, a vehicle such as an automobile, a ship, or the like. The artificial satellite 10 captures an image of a surface of the Earth while moving in the revolution orbit, and provides the captured image to the image generation apparatus 200. The image generation apparatus 200 connects a plurality of images provided from the artificial satellite 10 to generate an image indicating the surface of the Earth.

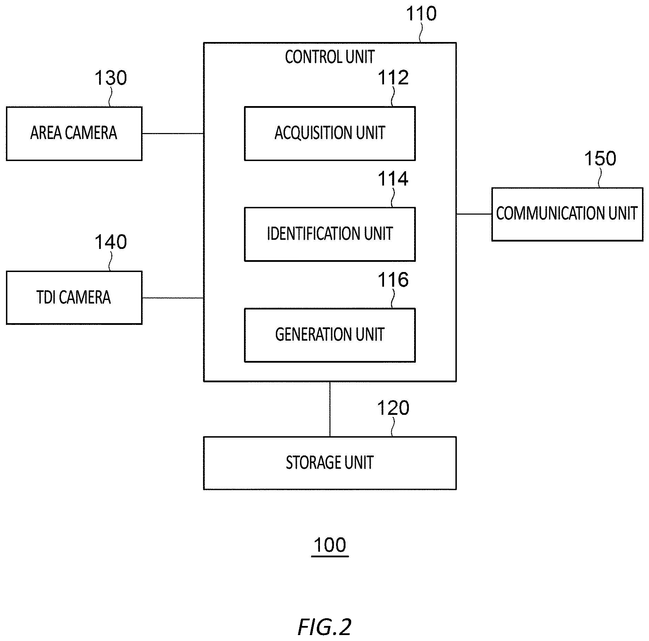

The artificial satellite 10 includes an image processing apparatus 100. Fig. 2 is a diagram illustrating an example of functional blocks of the image processing apparatus 100.

The image processing apparatus 100 includes a control unit 110, a storage unit 120, an area camera 130, a TDI camera 140, and a communication unit 150.

The area camera 130 captures a plurality of area images, each composed of M×N (M and N are integers of 2 or more) pixels, with M pixels in a first direction (vertical direction) corresponding to a moving direction of the artificial satellite 10 and N pixels in a second direction (horizontal direction) intersecting the first direction. The area camera 130 may include a low-resolution image sensor. The area camera 130 may capture, for example, an area image composed of 100M pixels (1280×960). Each of M and N may be an integer of 2 or more and 1500 or less.

The TDI camera 140 captures a plurality of line images, each composed of×L (n is an integer of 1 or more, and L is an integer of 3 or more that is larger than M and N) pixels, with n pixels in the first direction (vertical direction) corresponding to the moving direction of the artificial satellite 10 and L pixels in the second direction (horizontal direction) intersecting the first direction. The TDI camera 140 may include a time delay integration (TDI) sensor. The TDI camera 140 may capture, for example, a line image of 1×12288 pixels. n may be an integer of 1 to 256, and L may be an integer of 4,000 or more, 6,000 or more, or 10,000 or more.

The image processing apparatus 100 may include a line camera having a line sensor instead of the TDI camera 140. Since the TDI sensor captures a line image constituting one pixel by adding a plurality of pixels arranged in the first direction (vertical direction), it is possible to capture a high-quality image having a higher signal-to-noise ratio (SNR) than that of the line sensor.

When the artificial satellite 10 moves in an orbit along the moving direction corresponding to the first direction with high accuracy and high attitude stability, a connected image indicating the surface of the Earth with relatively high image quality can be obtained by aligning and connecting line images in the first direction. This method is referred to as a pushbroom method. However, in practice, the artificial satellite 10 may deviate from the orbit along the moving direction or deviate from a target attitude. Therefore, distortion may occur in the image obtained by aligning and connecting the line images in the first direction.

On the other hand, there is also a method of generating one image by superimposing high-resolution images using a high-resolution area sensor without using the TDI sensor. This method is referred to as a push frame method. However, processing of comparing and superimposing high-resolution images is burdensome, and requires a high-performance computer. When a high-performance computer is used, power consumption increases and weight also increases, so that, for example, when the artificial satellite 10 is a small artificial satellite, it is not preferable to mount such a computer having large weight and large power consumption. On the other hand, it is also conceivable to transmit images from the artificial satellite 10 to an apparatus such as the image generation apparatus 200 on ground, and perform processing of comparing and superimposing the images in the apparatus on the ground. However, since a high-resolution image has a large data amount, a communication load for transmitting the image from the artificial satellite 10 to an apparatus such as the image generation apparatus 200 on the ground increases.

In this regard, in the present embodiment, the image processing apparatus 100 compares low-resolution images captured by the area camera 130 to identify a pixel displacement amount between the images, and transmits, to the image generation apparatus 200 on the ground, pixel displacement amount information indicating the pixel displacement amount and a plurality of line images captured by the TDI camera 140. The image generation apparatus 200 adjusts a position in the second direction (horizontal direction) by using the pixel displacement amount, and generates a connected image by connecting the plurality of line images aligned in the first direction (vertical direction). Since the pixel displacement amount is identified by comparing the low-resolution images, a processing load of the image processing apparatus 100 is suppressed. In addition, since data transmitted to the image generation apparatus 200 on the ground includes the pixel displacement amount information having a relatively small data amount in addition to the plurality of line images, it is possible to suppress an increase in communication load when information is transmitted from the artificial satellite 10 to the image generation apparatus 200 on the ground.

The control unit 110 includes an acquisition unit 112, an identification unit 114, and a generation unit 116. The control unit 110 may be configured by a microprocessor such as a CPU or an MPU, a microcontroller such as an MCU, hardware such as an FPGA, or the like.

The acquisition unit 112 acquires a plurality of area images captured by the area camera 130 and a plurality of line images captured by the TDI camera 140. The acquisition unit 112 may acquire two or more line images between acquisition of a first area image and acquisition of a next second area image.

The identification unit 114 identifies a pixel displacement amount in the horizontal direction and the vertical direction between a plurality of area images, based on a plurality of area images. The identification unit 114 may identify the pixel displacement amount by comparing pixels of the plurality of area images. The identification unit 114 may identify the pixel displacement amount by using template matching to compare the plurality of area images.

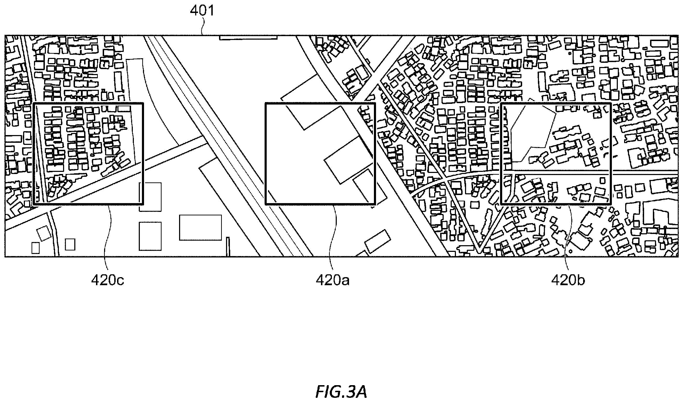

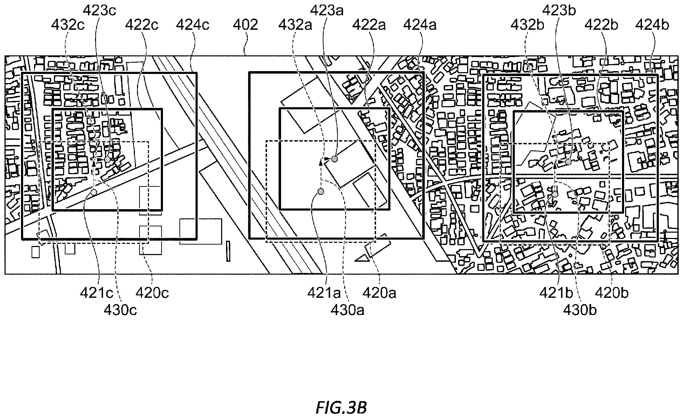

The plurality of area images includes, for example, a first area image 401 as illustrated in Fig. 3A and a second area image, which is captured subsequently to the first area image 401, as illustrated in Fig. 3B. The identification unit 114 may perform template matching between a first partial image in a first region 420a within a first area image 401 and each of a plurality of second partial images included in a search region 424a which is larger than the first region 420a and includes a second region 422a having a center 423a shifted by a first number of pixels 430a in the first direction (vertical direction) and by a second number of pixels 432a in the second direction (horizontal direction) from a center 421a of the first region 420a within a second area image 402, so as to identify, as a target partial image, a second partial image having a highest degree of correlation among the plurality of second partial images, and identify the pixel displacement amount in the horizontal direction and the vertical direction, based on the first partial image and the target partial image. The first number of pixels 430a and the second number of pixels 432a are determined based on the moving direction and a moving speed of the artificial satellite 10 which is a mobile object, and a moving direction and a moving speed of a ground surface which is a subject imaged by the area camera 130. The moving direction and the moving speed of the ground surface are determined by a direction of rotation of the Earth with respect to the area camera 130, a speed of the rotation of the Earth, and a ground speed of the artificial satellite 10.

The identification unit 114 may derive a degree of correlation between the first partial image and each of the plurality of second partial images, from a cross-correlation function obtained by convolving the first partial image and each of the plurality of second partial images in real space, and identify a second partial image having a highest degree of correlation.

The artificial satellite 10 moves at a constant speed in a predetermined orbit. Therefore, there is a high possibility that a position where a subject present in the first area image 401 is present in the second area image 402 is around a position shifted by the first number of pixels 430 in the first direction (vertical direction) and by the second number of pixels 432 in the second direction (horizontal direction) from a position of the subject in the first area image 401.

In this regard, the identification unit 114 may start search with a second partial image in which a pixel located at the center 423 of the second region 422 (search region) is a central pixel, among the plurality of second partial images, and identify the target partial image by performing template matching between the first partial image and the second partial images in order from a second partial image close to the second partial image, for example, clockwise or counterclockwise. Accordingly, the second partial image having the highest degree of correlation can be identified quickly, and a processing load on the control unit 110 can be reduced.

The identification unit 114 may derive a degree of correlation for a plurality of regions within the area image, and identify the pixel displacement amount with respect to the area image from each pixel displacement amount identified for the plurality of regions. For example, there is a case where a part within the area image includes a region having a small change in feature amount, such as a forest, a lake, or the sea, and there is a possibility that it is difficult for the identification unit 114 to accurately identify the pixel displacement amount by template matching for such a region. In such a case, it may be preferable that the identification unit 114 identifies the pixel displacement amounts for a plurality of regions, excludes outliers, and finally identifies the pixel displacement amount with respect to the area image. In addition, the identification unit 114 may identify the pixel displacement amount with respect to the area image by deriving a statistical value of each pixel displacement amount identified for the plurality of regions. The statistical value may be, for example, an average value, a maximum value, a minimum value, or a variance.

For example, the identification unit 114 may perform template matching between a third partial image in a third region 420b different from the first region 420a within the first area image 401 and each of a plurality of fourth partial images included in a search region 424b which is larger than the third region 420b and includes a fourth region 422b having a center 423b shifted by a first number of pixels 430b in the first direction (vertical direction) and by a second number of pixels 432b in the second direction (horizontal direction) from a center 421b of the third region 420b within the second area image 402, so as to identify, as another target partial image, a fourth partial image having a highest degree of correlation among the plurality of fourth partial images, and identify the pixel displacement amount based on the first partial image, the target partial image, the third partial image, and the another target partial image.

The identification unit 114 may further perform template matching between a fifth partial image in a fifth region 420c different from the first region 420a and the third region 420c within the first area image 401 and each of a plurality of sixth partial images included in a search region 424c which is larger than the fifth region 420c and includes a sixth region 422c having a center 423c shifted by a first number of pixels 430c in the first direction (vertical direction) and by a second number of pixels 432c in the second direction (horizontal direction) from a center 421c of the fifth region 420c within the second area image 402, so as to identify, as still another target partial image, a sixth partial image having a highest degree of correlation among the plurality of sixth partial images, and identify the pixel displacement amount further based on the fifth partial image and the still another target partial image. The identification unit 114 may identify the pixel displacement amount with respect to the area image, based on a statistical value of the pixel displacement amount identified from the first partial image and the target partial image, the pixel displacement amount identified from the third partial image and the another target partial image, and the pixel displacement amount identified from the fifth partial image and the still another target partial image.

The identification unit 114 may identify the pixel displacement amount in the horizontal direction and the vertical direction in units of subpixels, from a positional relationship between a center of the first partial image and a centroid derived from each value obtained by raising, to a third power or a fourth power, each value obtained by normalizing a degree of correlation with the target partial image and a degree of correlation with each of a plurality of peripheral partial images each having a center within a range of a predetermined number of pixels from a center of the target partial image. The range of the number of pixels may be eight pixels around a central pixel of the target partial image, that is, a range of 3×3 pixels centered on the central pixel of the target partial image.

Examples of a method of image processing for the identification unit 114 to identify the pixel displacement amount in the horizontal direction and the vertical direction between area images include feature point matching, a phase-only correlation method, or the like in addition to the template matching as described above. However, it is preferable that the image processing apparatus 100 mounted on the artificial satellite 10 has as low a processing load and as low power consumption as possible.

In the feature point matching, when there is no feature amount unique to a local range, the image displacement amount cannot be correctly identified, and calculation cost is large. The subject imaged by the area camera 130 is the ground surface, and may be, for example, a forest or the like. In a case of an image having similar features in a wide range as described above, there is no feature amount unique to a local range. Therefore, when the feature point matching is adopted, the processing load of the image processing apparatus 100 increases, which is not preferable.

The phase-only correlation method is a method of performing matching between images by using a phase spectrum after Fourier transform of each image to be compared. In the phase-only correlation method, the matching between images is performed focusing only on phase components after Fourier transform, and luminance (amplitude) information of an image is normalized.

Here, the image sensor included in the area camera 130 mounted on the artificial satellite 10 is preferably lightweight and small. Thus, a size of the image sensor is preferably small. On the other hand, in order to perform the matching between images, a same subject (feature amount) needs to be included in each image to be compared. When the size of the image sensor is small, a capturing interval of images captured by the area camera 130 needs to be set to a relatively short interval in consideration of the speed of the artificial satellite 10. The capturing interval is, for example, about several milliseconds to several tens of milliseconds. There is a low possibility that luminance greatly changes between images captured at such a short capturing interval. That is, there is a high correlation in luminance between images. In consideration of this point, in the phase-only correlation method that normalizes the luminance information, an estimation accuracy of the image displacement amount decreases.

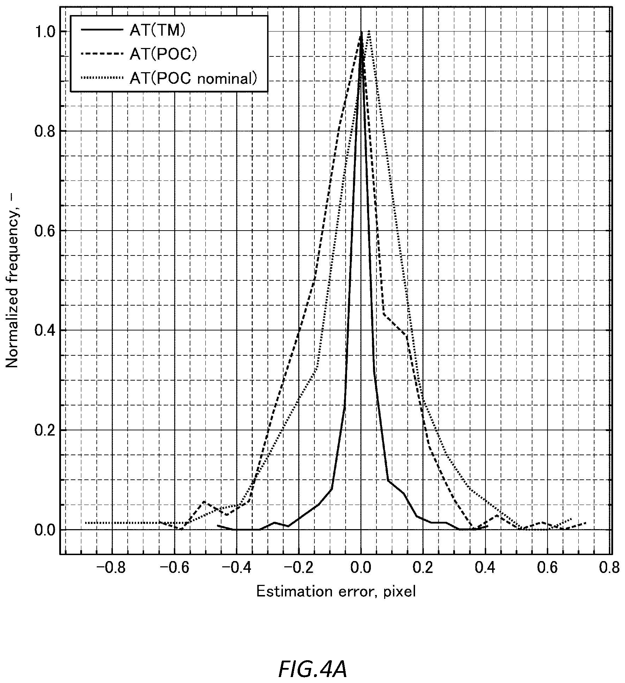

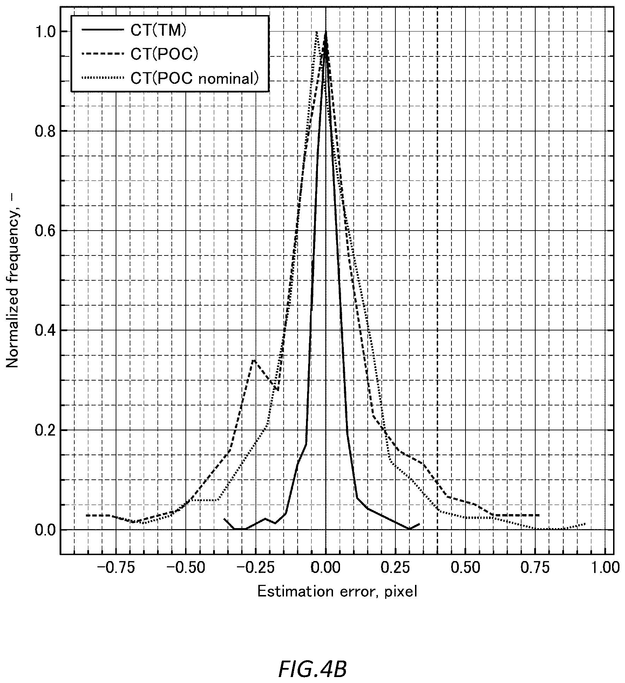

Figs. 4A and 4B illustrate examples of simulation results of an estimation error distribution when the pixel displacement amount is estimated by each of the template matching (TM) and the phase-only correlation (POC). In Figs. 4A and 4B, "POC nominal" indicates a case where one image to be compared is shifted in a vertical direction (AT direction) by a number of pixels, considering movement of the artificial satellite 10, and then matching is performed. On the other hand, "POC" indicates a case where the matching is performed without shifting one image to be compared in the vertical direction (AT direction) by the number of pixels considering the movement of the artificial satellite 10. Fig. 4A illustrates the estimation error part in the vertical direction (AT direction), and Fig. 4B illustrates the estimation error distribution in a horizontal direction (CT direction).

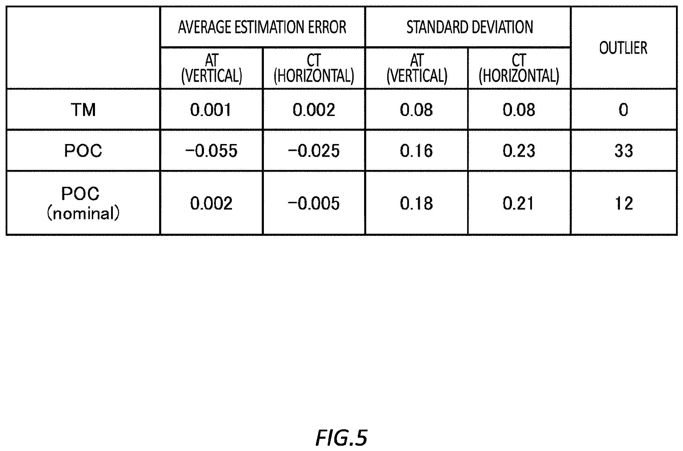

Fig. 5 illustrates an example of simulation results of an average estimation error and a standard deviation when the pixel displacement amount is estimated by each of the template matching (TM) and the phase-only correlation (POC). An outlier in Fig. 5 indicates a total number of results in which the pixel displacement amount is one pixel or more.

The simulation results illustrated in Figs. 4A, 4B, and 5 are results of 500 trials in which two images shifted by 0.2 pixels in the horizontal direction and 0.3 pixels in the vertical direction are used as two images to be compared, and different portions of the images are used as template images.

In the phase-only correlation, a normalized cross-correlation power spectrum is derived by synthesizing two phase spectra obtained after Fourier transform of the two images to be compared, and a result thereof is inverse Fourier-transformed to obtain a map image of a degree of correlation. A centroid is calculated from the degree of correlation of 5×5 pixel regions in a vicinity around a pixel having a maximum value of the degree of correlation in the map image, and the pixel displacement amount between the two images is estimated.

On the other hand, in the template matching, a value of the cross-correlation function, which is obtained by convolving, in real space, two images to be compared while shifting a position of one of the two images, is derived as the degree of correlation. Then, each degree of correlation derived for each position included in a 3×3 pixel region centered on a pixel at a position showing a highest degree of correlation is normalized, then a centroid is calculated from values obtained by raising these normalized values to the third power, and the pixel displacement amount between the two images is estimated. Note that, in the template matching, there is also a method of convolving two images in frequency space, but in the present method, since a range for calculating the degree of correlation can be limited, convolution in real space requires less calculation cost than convolution in frequency space and is therefore preferable.

Also from these simulation results illustrated in Figs. 4A, 4B, and 5, it can be seen that the template matching (TM) has a smallest error, and is more preferable as a method of estimating the pixel displacement amount.

Here, as the method of estimating the pixel displacement amount in units of subpixels in the template matching, there is a method such as parabola fitting in addition to the centroid calculation as described above. In addition, in the centroid calculation, it is also conceivable to perform calculation by using a first power as it is without raising the value to the third power or the like. Hereinafter, it will be described that, as the method of estimating the pixel displacement amount in units of subpixels, it is preferable to use the centroid calculation using a third-power or fourth-power value.

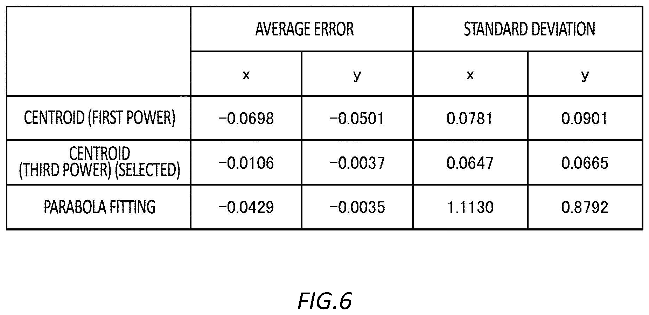

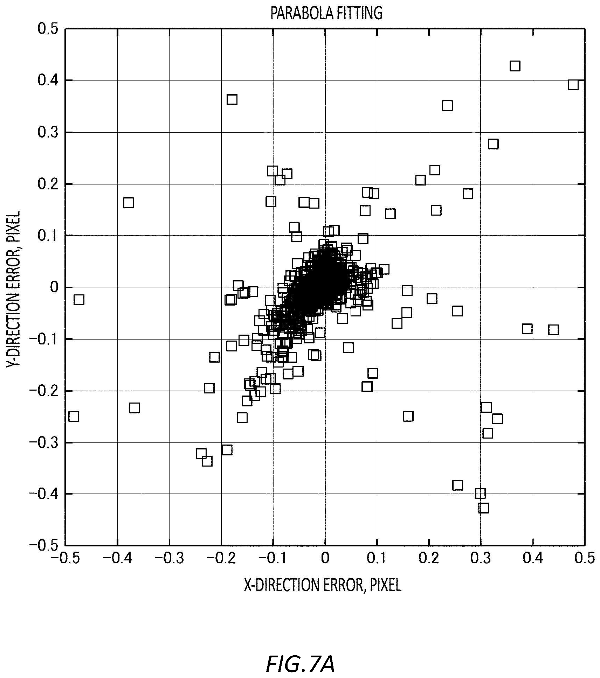

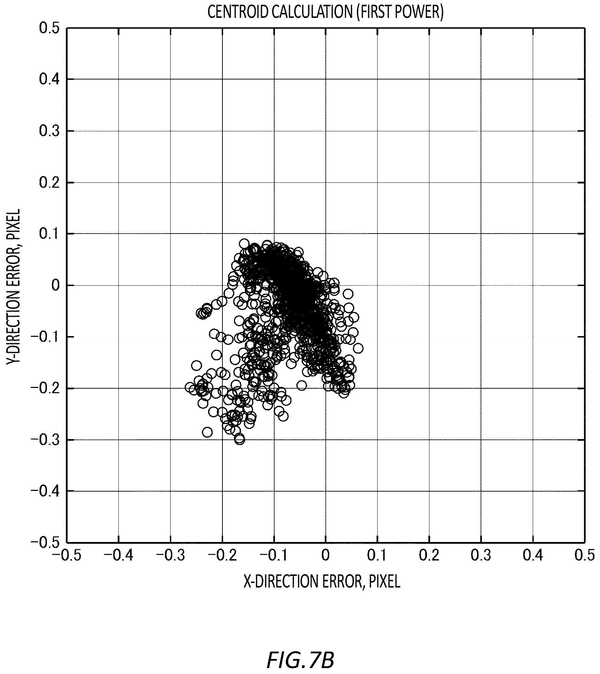

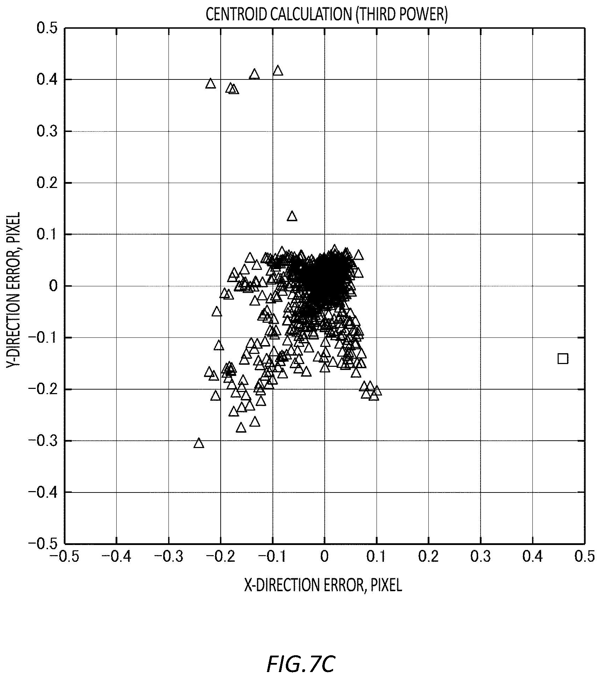

Figs. 6, 7A, 7B, and 7C illustrate simulation results of the pixel displacement amount performed for the parabola fitting, the centroid calculation using a first-power value, and the centroid calculation using a third-power value. Also in these simulations, similarly to the above, two images shifted by 0.2 pixels in the horizontal direction (x axis direction) and 0.3 pixels in the vertical direction (y axis direction) are used as two images to be compared, and results of 500 trials are obtained by using different portions of the images as template images.

Fig. 6 illustrates average errors and standard deviations of the pixel displacement amounts derived by the parabola fitting, the centroid calculation using the first-power value and the centroid calculation using the third-power value.

Fig. 7A illustrates a distribution of an x-direction error and a y-direction error of the pixel displacement amount derived by the parabola fitting. Fig. 7B illustrates a distribution of an x-direction error and a y-direction error of the pixel displacement amount derived by the centroid calculation using the first-power value. Fig. 7C illustrates a distribution of an x-direction error and a y-direction error of the pixel displacement amount derived by the centroid calculation using the third-power value.

As illustrated in Fig. 7A, the x-direction error and the y-direction error of the pixel displacement amount derived by the parabola fitting have a large variation. On the other hand, as illustrated in Figs. 7B and 7C, the x-direction errors and the y-direction errors of the pixel displacement amounts derived by the centroid calculation using the first-power value and the centroid calculation using the third-power value have variations less than that in the case of the parabola fitting. However, the x-direction error and the y-direction error of the pixel displacement amount derived by the centroid calculation using the first-power value show greater bias in an error direction than the x-direction error and the y-direction error of the pixel displacement amount derived by the centroid calculation using the third-power value.

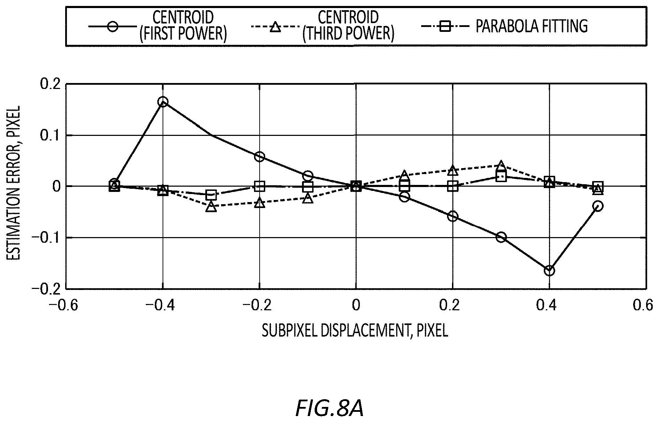

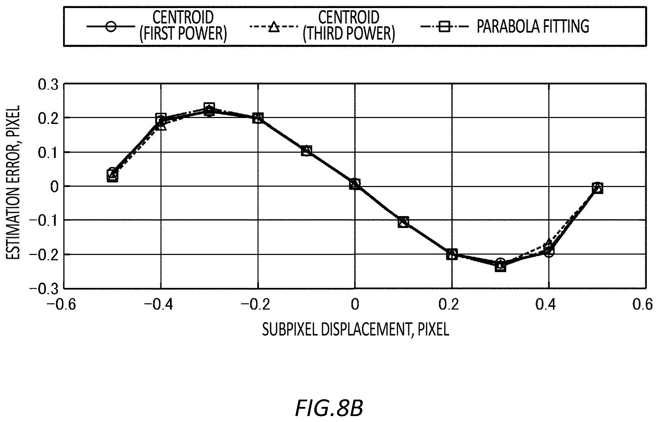

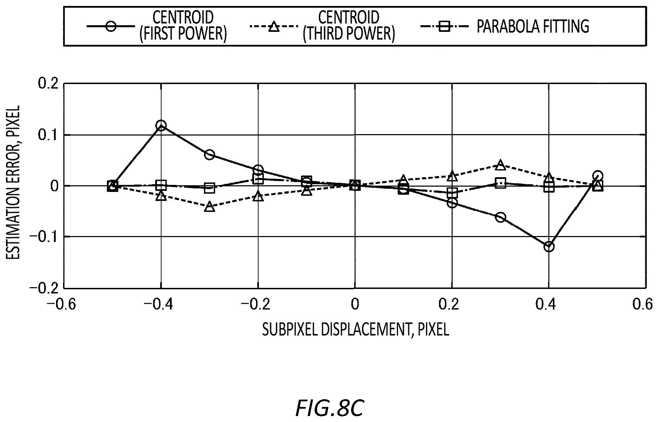

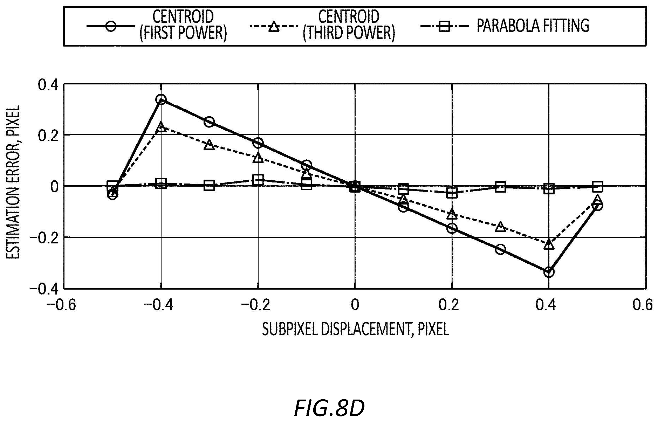

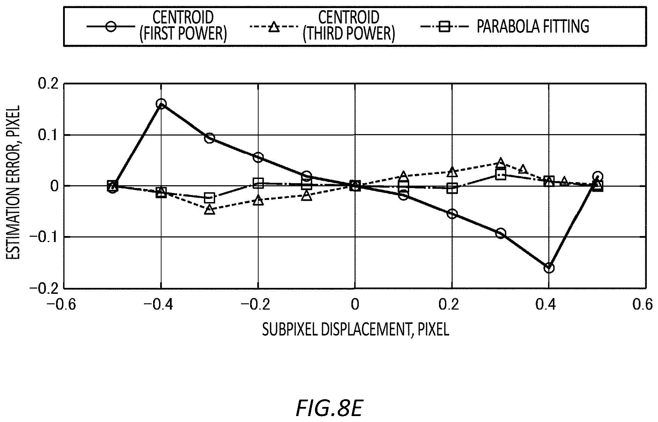

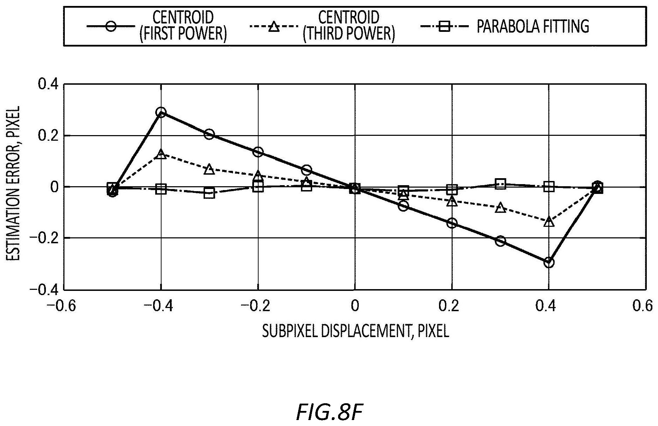

Figs. 8A, 8B, 8C, 8D, 8E, and 8F illustrate simulation results of deriving the pixel displacement amount by the parabola fitting, the centroid calculation using the first-power value, and the centroid calculation using the third-power value, by using images shifted by different subpixel amounts in the horizontal direction (x axis direction). Figs. 8A, 8B, 8C, 8D, 8E, and 8F illustrate simulation results performed on images of different scenes, respectively.

As illustrated in Figs. 8A to 8F, the parabola fitting is less affected by a phenomenon in which an estimation error is biased to an integer value, so-called pixel locking, than the centroid calculation. However, as compared with the centroid calculation using the third power, in the centroid calculation using the first-power value, an error tends to be biased in a same positive/negative direction as a positive/negative direction of subpixel displacement in images of all scenes. Also from this result, it can be seen that the centroid calculation using the first-power value shows greater bias in the error direction than the centroid calculation using the third power.

As shown in the simulation results as described above, as the method of estimating the pixel displacement amount in units of subpixels, the centroid calculation using the third-power value is preferable.

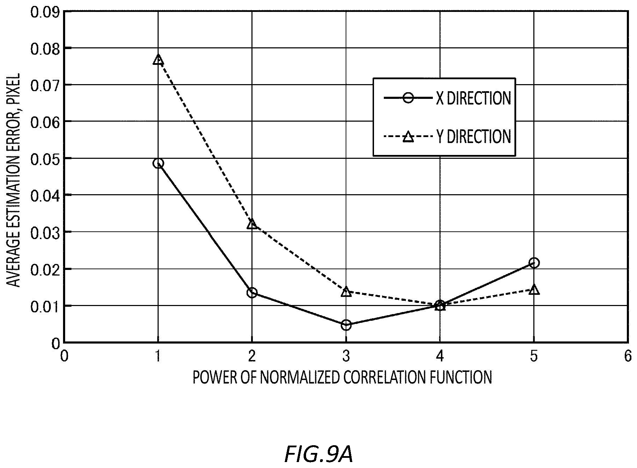

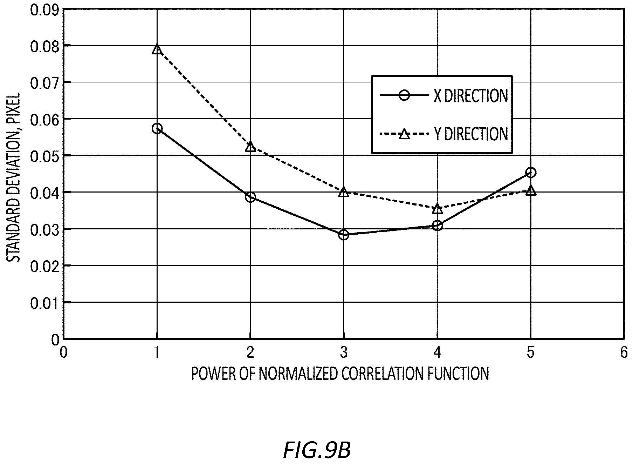

Figs. 9A and 9B illustrate an average estimation error and a standard deviation in an x direction of the pixel displacement amount performed by the centroid calculation performed by changing a value of a power of a normalized correlation function. As illustrated in Figs. 9A and 9B, it can be seen that the pixel displacement amount identified by the centroid calculation using the third power or fourth power shows smaller errors than that by the centroid calculation using the first power or the second power. In addition, with a power greater than the fourth power, the error tends to increase again. Thus, as the method of estimating the pixel displacement amount in units of subpixels in the template matching, it can be seen that the centroid calculation using the third power or fourth power is preferable.

As described above, the identification unit 114 convolves two images to be compared in real space to identify a positional relationship between the two images having a maximum degree of correlation, and further derives the pixel displacement amount in units of subpixels by the centroid calculation using the third power or fourth power. Accordingly, in the area camera 130 which has an image sensor of a relatively small size and is mounted on the artificial satellite 10 or the like, it is possible to accurately identify the pixel displacement amount between two images with small changes in luminance value captured at a relatively short capturing interval.

The generation unit 116 generates transmission data for transmitting a plurality of line images and pixel displacement amount information indicating the pixel displacement amount to the image generation apparatus 200 via the communication unit 150. The communication unit 150 generates transmission data in a format compliant with a predetermined communication system, the transmission data including the plurality of line images and the pixel displacement amount information indicating the pixel displacement amount.

The communication unit 150 transmits the transmission data to the image generation apparatus 200 according to the predetermined communication system such as a fifth generation mobile communication system (5G).

The image generation apparatus 200 receives the plurality of line images and the pixel displacement amount information indicating the pixel displacement amount, adjusts a position of each of the plurality of line pixels in the horizontal direction and the vertical direction by using the pixel displacement amount, and generates a connected image by vertically aligning and connecting the plurality of line images with positions adjusted.

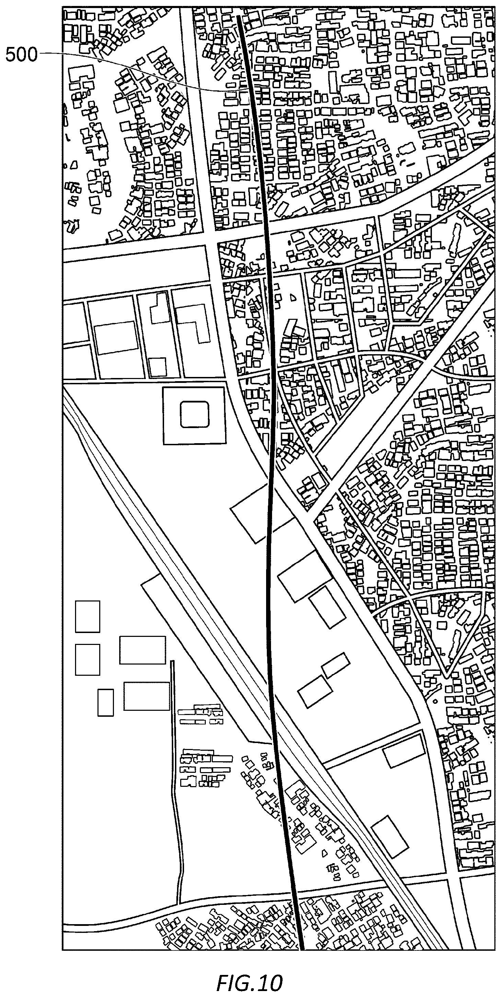

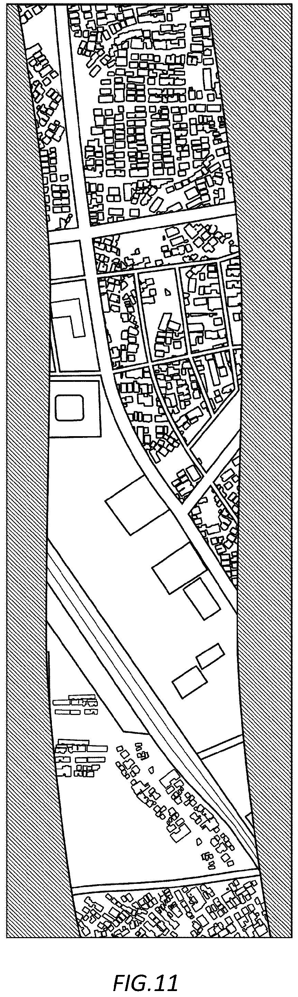

For example, as illustrated in Fig. 10, when the artificial satellite 10 moves along the revolution orbit 500, the image generation apparatus 200 adjusts a position of each of a plurality of line pixels in the horizontal direction and the vertical direction by using the pixel displacement amount, and, as illustrated in Fig. 11, generates a connected image by vertically aligning and connecting the plurality of line images with positions adjusted. Accordingly, according to the image processing system 300 according to the present embodiment, image distortion can be prevented. Since the image captured by the area camera 130 has a low resolution, the processing load of the image processing apparatus 100 in the case of identifying the pixel displacement amount by comparing images is relatively light. In addition, since data transmitted to the image generation apparatus 200 on the ground includes the pixel displacement amount information having a relatively small data amount in addition to the plurality of line images, it is possible to suppress an increase in communication load when information is transmitted from the artificial satellite 10 to the image generation apparatus 200 on the ground.

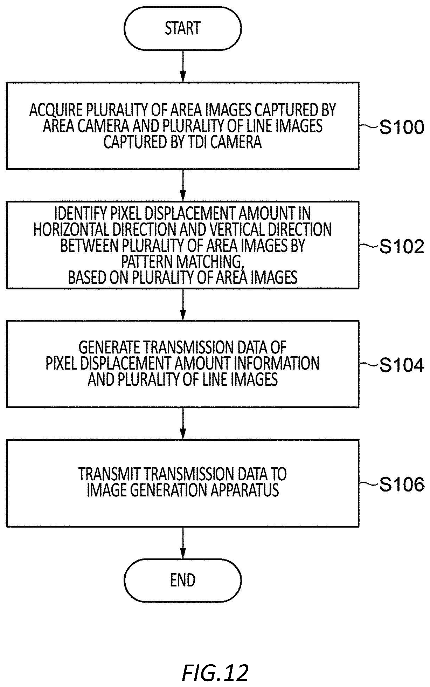

Fig. 12 is a flowchart illustrating an example of a procedure of image transmission of the image processing apparatus 100.

The acquisition unit 112 acquires a plurality of area images captured by the area camera 130 and a plurality of line images captured by the TDI camera 140 (S100). The acquisition unit 112 may acquire a plurality of area images in a first cycle and acquire a plurality of line images in a second cycle shorter than the first cycle. That is, a number of the plurality of line images acquired by the acquisition unit 112 may be greater than a number of the plurality of area images.

Based on the plurality of area images, the identification unit 114 identifies a pixel displacement amount in the horizontal direction and the vertical direction between the plurality of area images by pattern matching (S102). For example, the identification unit 114 may derive a degree of correlation between a first partial image and each of a plurality of second partial images, from a cross-correlation function obtained by convolving the first partial image within a first area image and each of the plurality of second partial images within a second area image subsequent to the first area image in real space, identify a second partial image having a highest degree of correlation, further normalize a degree of correlation of another second partial image having a center at a position of a 3×3 pixel block in which a center of the second partial image having the highest degree of correlation is located at a center and a degree of correlation of the second partial image having the highest degree of correlation, further derive a centroid of each value obtained by raising, to the third power or the fourth power, the normalized value, and identify the pixel displacement amount in the horizontal direction and the vertical direction from a positional relationship between the centroid and a center of the first partial image.

The generation unit 116 generates transmission data for transmitting the plurality of line images and the pixel displacement amount information indicating the pixel displacement amount to the image generation apparatus 200 via the communication unit 150 (S104). The communication unit 150 transmits the transmission data to the image generation apparatus 200 according to a predetermined communication system (S106).

As described above, since the data transmitted to the image generation apparatus 200 on the ground includes the pixel displacement amount information having a relatively small data amount in addition to the plurality of line images, it is possible to suppress an increase in communication load when information is transmitted from the artificial satellite 10 to the image generation apparatus 200 on the ground.

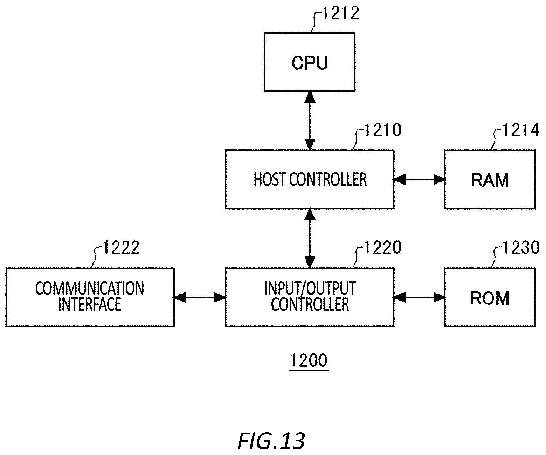

Fig. 13 shows an example of a computer 1200 in which a plurality of aspects of the present invention may be embodied in whole or in part. Programs installed in the computer 1200 can cause the computer 1200 to function as operations associated with the apparatus according to the embodiments of the present invention or one or more "units" of the apparatus. Alternatively, the programs can cause the computer 1200 to execute the operations or the one or more "units". The programs can cause the computer 1200 to execute a process according to the embodiments of the present invention or steps of the process. Such programs may be executed by a CPU 1212 to cause the computer 1200 to perform specific operations associated with some or all of the blocks in the flowcharts and block diagrams described in the present specification.

The computer 1200 according to the present embodiment includes the CPU 1212 and a RAM 1214, which are mutually connected by a host controller 1210. The computer 1200 also includes a communication interface 1222 and an input/output unit, which are connected to the host controller 1210 via an input/output controller 1220. The computer 1200 also includes a ROM 1230. The CPU 1212 operates according to the programs stored in the ROM 1230 and the RAM 1214, thereby controlling each unit.

The communication interface 1222 communicates with other electronic devices via a network. A hard disk drive may store the programs and data used by the CPU 1212 in the computer 1200. The ROM 1230 stores therein boot programs or the like executed by the computer 1200 at the time of activation, and/or programs depending on hardware of the computer 1200. Programs are provided via a computer-readable recording medium such as a CD-ROM, a USB memory, or an IC card, or via a network. The programs are installed in the RAM 1214 or the ROM 1230 which is also an example of the computer-readable recording medium, and executed by the CPU 1212. The information processing described in these programs is read by the computer 1200, and provides cooperation between the programs and the various types of hardware resources. The apparatus or method may be configured by implementing operations or processing of information according to use of the computer 1200.

For example, when communication is performed between the computer 1200 and an external device, the CPU 1212 may execute a communication program loaded in the RAM 1214 and instruct the communication interface 1222 to perform communication processing based on processing written in the communication program. The communication interface 1222, under the control of the CPU 1212, reads transmission data stored in a transmission buffer region provided in a recording medium such as the RAM 1214 or the USB memory, transmits the read transmission data to the network, or writes reception data received from the network to a reception buffer region or the like provided on the recording medium.

In addition, the CPU 1212 may cause all or necessary portion of a file or a database stored in an external recording medium such as a USB memory, to be read by the RAM 1214, and execute various types of processing on the data on the RAM 1214. Next, the CPU 1212 may write back the processed data into the external recording medium.

Various types of information, such as various types of programs, data, tables, and databases, may be stored in the recording medium to undergo information processing. The CPU 1212 may execute, on the data read from the RAM 1214, various types of processing, including various types of operations designated by an instruction sequence of a program, which are described throughout the present disclosure, information processing, a condition judgment, a conditional branch, an unconditional branch, information search/replacement, and the like, and write back the result to the RAM 1214. In addition, the CPU 1212 may search for information in a file, a database, or the like in the recording medium. For example, when a plurality of entries, each having an attribute value of a first attribute associated with an attribute value of a second attribute, is stored in the recording medium, the CPU 1212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The programs or software modules described above may be stored in a computer-readable storage medium on or near the computer 1200. In addition, a recording medium such as a hard disk or a RAM provided in a server system connected to a dedicated communication network or the Internet can be used as the computer-readable storage medium, so that the programs are provided to the computer 1200 via the network.

Computer-readable medium may include any tangible device that can store instructions for execution by a suitable device. As a result, the computer-readable medium having instructions stored therein includes an article of manufacture including instructions which can be executed to create means for performing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a FLOPPY (registered trademark) disk, a diskette, a hard disk, a random access memory (RAM), a read only memory (ROM), an erasable programmable read only memory (EPROM or a flash memory), an electrically erasable programmable read only memory (EEPROM (registered trademark)), a static random access memory (SRAM), a compact disc read only memory (CD-ROM), a digital versatile disk (DVD), a BLU-RAY (registered trademark) disk, a memory stick, an integrated circuit card, and the like.

Computer-readable instructions may include either a source code or an object code written in any combination of one or more programming languages. The source code or the object code includes a conventional procedural programming language. The conventional procedural programming language may be assembler instructions, instruction-set-architecture (ISA) instructions, machine instructions, machine-dependent instructions, microcode, firmware instructions, state-setting data, or an object-oriented programming language such as SMALLTALK (registered trademark), JAVA (registered trademark), C++, etc., and programming languages, such as the "C" programming language or similar programming languages. The computer-readable instructions may be provided to a processor or a programmable circuit of a programmable data processing apparatus locally or via a local area network (LAN) or a wide area network (WAN) such as the Internet or the like. The processor or the programmable circuit may execute the computer-readable instructions in order to create means for performing operations specified in the flowcharts or block diagrams.

Here, the computer may be a computer such as a personal computer (PC), a tablet computer, smartphone, a work station, a server computer, or a general purpose computer, or may be a computer system in which a plurality of computers are connected. Such computer system to which the plurality of computers are connected is also referred to as a distributed computing system, and is a computer in a broad sense. In a distributed computing system, a plurality of computers collectively execute a program by each of the plurality of computers executing a portion of the program, and passing data during the execution of the program among the computers as needed.

Examples of the processor include a computer processor, a central processing unit (CPU), a processing unit, a microprocessor, a digital signal processor, a controller, a microcontroller, an FPGA, and the like. The computer may include one processor or a plurality of processors. In a multi-processor system including a plurality of processors, the plurality of processors collectively execute a program by each of the processors executing a portion of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. In addition, which portion of the program each of the plurality of processors is to execute may be statically determined by multi-processor aware programming.

While the present invention has been described by way of the embodiments, the technical scope of the present invention is not limited to the scope described in the above-described embodiments. It is apparent to persons skilled in the art that various alterations or improvements can be made to the above-described embodiments. It is also apparent from the scope of the claims that the embodiments added with such alterations or improvements can be included in the technical scope of the present invention.

Note that the operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the operation flow is described by using phrases such as "first" or "next" in the scope of the claims, specification, or drawings, it does not necessarily mean that the process must be performed in this order.

### EXPLANATION OF REFERENCES

10: artificial satellite;
100: image processing apparatus;
110: control unit;
112: acquisition unit;
114: identification unit;
116: generation unit;
120: storage unit;
130: area camera;
140: TDI camera;
150: communication unit;
200: image generation apparatus;
300: image processing system;
500: revolution orbit;
1200: computer;
1210: host controller;
1212: CPU;
1214: RAM;
1220: input/output controller;
1222: communication interface; and
1230: ROM.

## Claims

1. An image processing apparatus comprising:
an acquisition unit which acquires a plurality of area images which are captured by a first imaging apparatus mounted on a mobile object and are each composed of M×N (M and N are integers of 2 or more) pixels, with M pixels in a first direction corresponding to a moving direction of the mobile object and N pixels in a second direction intersecting the first direction, and acquires a plurality of line images which are captured by a second imaging apparatus mounted on the mobile object and are each composed of n×L (n is an integer of 1 or more, and L is an integer of 3 or more that is larger than M and N) pixels, with n pixels in the first direction and L pixels in the second direction;
an identification unit which identifies a pixel displacement amount in the first direction and the second direction between the plurality of area images, based on the plurality of area images; and
a generation unit which generates transmission data for transmitting the plurality of line images and pixel displacement amount information indicating the pixel displacement amount via a communication unit to an image generation apparatus which generates a connected image by connecting the plurality of line images which are adjusted in position in the first direction and the second direction by using the pixel displacement amount and aligned in the first direction.

2. The image processing apparatus according to claim 1, wherein the identification unit identifies the pixel displacement amount by comparing the plurality of area images by template matching.

3. The image processing apparatus according to claim 2, wherein
the plurality of area images includes a first area image and a second area image captured subsequently to the first area image, and
the identification unit performs template matching between a first partial image in a first region within the first area image and each of a plurality of second partial images included in a search region which is larger than the first region and includes a second region shifted by a first number of pixels in the first direction and by a second number of pixels in the second direction from the first region within the second area image, so as to identify, as a target partial image, a second partial image having a highest degree of correlation among the plurality of second partial images, and identifies the pixel displacement amount based on the first partial image and the target partial image.

4. The image processing apparatus according to claim 3, wherein the identification unit derives a degree of correlation between the first partial image and each of the plurality of second partial images, from a cross-correlation function obtained by convolving the first partial image and each of the plurality of second partial images in real space.

5. The image processing apparatus according to claim 3, wherein the first number of pixels and the second number of pixels are determined based on a moving direction and a moving speed of the mobile object, and a moving direction and a moving speed of a subject relative to the first imaging apparatus.

6. The image processing apparatus according to claim 3, wherein the identification unit starts search with a second partial image in which a pixel located at a center of the second region is a central pixel, among the plurality of second partial images, and identifies the target partial image by performing template matching between the first partial image and the second partial images in order from a second partial image closer to the second partial image.

7. The image processing apparatus according to claim 3, wherein the identification unit identifies the pixel displacement amount in units of subpixels from a positional relationship between a center of the first partial image and a centroid derived from each value obtained by raising, to a third power or a fourth power, each value obtained by normalizing a degree of correlation with the target partial image and a degree of correlation with each of a plurality of peripheral partial images each having a center within a range of a predetermined number of pixels from a center of the target partial image.

8. The image processing apparatus according to claim 3, wherein the identification unit performs template matching between a third partial image in a third region different from the first region within the first area image and each of a plurality of fourth partial images included in a search region which is larger than the third region and includes a fourth region shifted by the first number of pixels in the first direction and by the second number of pixels in the second direction from the third region within the second area image, so as to identify, as another target partial image, a fourth partial image having a highest degree of correlation among the plurality of fourth partial images, and identifies the pixel displacement amount based on the first partial image, the target partial image, the third partial image, and the another target partial image.

9. The image processing apparatus according to claim 8, wherein the identification unit identifies the pixel displacement amount between the first area image and the second area image, based on a statistical value of a pixel displacement amount based on the first partial image and the target partial image and a pixel displacement amount based on the third partial image and the another target partial image.

10. The image processing apparatus according to claim 1, wherein
the first imaging apparatus includes an area sensor which captures the plurality of area images, and
the second imaging apparatus includes a line sensor which captures the plurality of line images or a time delay integration (TDI) sensor.

11. The image processing apparatus according to claim 1, wherein the mobile object is a flying object or an artificial satellite.

12. An artificial satellite comprising:
the image processing apparatus according to any one of claims 1 to 11;
the first imaging apparatus;
the second imaging apparatus; and
the communication unit which transmits the transmission data to the image generation apparatus.

13. An image processing system comprising:
the artificial satellite according to claim 12; and
the image generation apparatus which receives the transmission data and generates the connected image.

14. An image processing method comprising:
acquiring a plurality of area images which are captured by a first imaging apparatus mounted on a mobile object and are each composed of M×N (M and N are integers of 2 or more) pixels, with M pixels in a first direction corresponding to a moving direction of the mobile object and N pixels in a second direction intersecting the first direction, and acquiring a plurality of line images which are captured by a second imaging apparatus mounted on the mobile object and are each composed of n×L (n is an integer of 1 or more, and L is an integer of 3 or more that is larger than M and N) pixels, with n pixels in the first direction and L pixels in the second direction;
identifying a pixel displacement amount in the first direction and the second direction between the plurality of area images, based on the plurality of area images; and
generating transmission data for transmitting the plurality of line images and pixel displacement amount information indicating the pixel displacement amount via a communication unit to an image generation apparatus which generates a connected image by connecting the plurality of line images which are adjusted in position in the first direction and the second direction by using the pixel displacement amount and aligned in the first direction.

15. A program which, when executed by a computer, causes the computer to function as:
an acquisition unit which acquires a plurality of area images which are captured by a first imaging apparatus mounted on a mobile object and are each composed of M×N (M and N are integers of 2 or more) pixels, with M pixels in a first direction corresponding to a moving direction of the mobile object and N pixels in a second direction intersecting the first direction, and acquires a plurality of line images which are captured by a second imaging apparatus mounted on the mobile object and are each composed of n×L (n is an integer of 1 or more, and L is an integer of 3 or more that is larger than M and N) pixels, with n pixels in the first direction and L pixels in the second direction;
an identification unit which identifies a pixel displacement amount in the first direction and the second direction between the plurality of area images, based on the plurality of area images; and
a generation unit which generates transmission data for transmitting the plurality of line images and pixel displacement amount information indicating the pixel displacement amount via a communication unit to an image generation apparatus which generates a connected image by connecting the plurality of line images which are adjusted in position in the first direction and the second direction by using the pixel displacement amount and aligned in the first direction.
